# EUROPEAN PATENT APPLICATION

(11) **EP 1 164 774 A1**
(43) Date of publication of application: **19.12.2001**
(21) Application number: 01305239.4
(22) Date of filing: 15.06.2001
(51) Int. Cl.: H04M 3/56, H04Q 7/38

(54) **Apparatus for facilitating mobile teleconference**

(30) Priority: 16.06.2000 GB 0014888
(71) Applicant: INTELLPROP LIMITED, Guernsey, Channel Islands (GB)
(72) Inventor: Wilson, Jeffrey, Fareham, Hampshire PO16 7OH (GB)
(74) Representative: Pilch, Adam John Michael

(57) **Abstract**

Apparatus receives and responds to a conference request message, such as an SMS text message, to set up a voice teleconference. The request message includes data representing a conference request identifier and a group identifier indicative of delegates who are to take part in a group conference. A control processor (6) detects the conference request identifier in the request message and allocates a telephone number of the conference equipment (12) allowing interconnection of telephone calls from the delegates' telephones (1,8). A conference allocation message is communicated to each of the delegates, the message including data representative of the telephone number of the conference equipment (12), and a conference allocation identifier. An address, such as a telephone number, is derived from the group identifier for each of the delegates, and the conference allocation message is sent to that address.

## Description

This invention relates to telecommunications services apparatus, and in particular to such apparatus capable of receiving and responding to a conference request message, for example allowing users of the Global System for Mobile Communications (GSM) short message service (SMS) to more easily set up voice conferences.

Over the past few years there has been phenomenal growth in the use of SMS messaging (texting) predominantly in the youth market. The number of messages sent each month continues to rise dramatically and the short message service now provides a significant proportion of the revenue for mobile operators.

In the UK alone in early 2000 there were over 27,000,000 mobile users. The majority of these users have first generation handsets with SMS capability but no advanced features such as GPRS or WAP. Therefore to achieve significant market penetration, development of advanced features must be compatible with generic handsets. Although not all users subscribe to a service which permits them to send SMS messages all handsets have the capability to receive them. Also due to the revenue implications the majority of new handsets are purchased under commercial offerings which provide SMS receiving capability free of charge. Users only pay for the messages that they send. Typically, all users can receive messages whether or not they subscribe to the SMS sending service.

At present if one wants to send the same SMS message to multiple recipients, it is generally necessary to manually send the message multiple times. Although it is not necessary to re-enter the text of the message, it is generally necessary to perform each send as a separate operation.

Certain sophisticated telephone handsets have the capability of storing within the handset a definition of one or more groups of recipients, usually identified by a label. Some handsets also allow a recipient list to be created at the time of sending. For example, after a message has been created a recipient is normally selected from the handset's internal telephone book. Some handsets then allow additional recipients to be added to the addressee list at this point. When the message is sent the handset then performs a sequence of sending operations one to each nominated recipient. In the case of handsets which support group definition, the same effect is achieved by selecting the 'group' name as the single recipient of the message. The handset still performs a sequence of individual sends.

It is also known that some GSM mobile networks support the sending of SMS messages to multiple recipients using functionality built into their short message service centres (SMSCs). This functionality is not widely used or promoted largely because of the complexity and inconvenience of setting it up prior to sending an SMS message.

It is further known that mobile handsets can often support wired or wireless links to other computing devices such as personal computers or PDAs. These devices may support telephone list capabilities and may be able to control some or all of the handset's functions. It is therefore possible to use the attached computing device to manage groups of addressees and send SMS messages to multiple recipients.

In order to achieve simple group configuration, it is desirable that the data storage which defines the members of each group is managed by the network rather than by the users' handsets. It therefore follows that the user must have a means of interacting with the network in order to define and manage the membership of his groups. This mechanism will normally include a means for adding, deleting and listing the members of a group. Many syntaxes are possible for implementation of these mechanisms. Patent application serial numbers WO94/09599 and GB 2 327 571 A illustrate one way of defining group members and distributing SMS messages to members of a group.

There are three main types of telephone conferencing service currently available -
1. Bureau organised conferencing
2. Chairman outdial conferencing
3. 'Meet me' conferencing

Bureau based conferencing is where the organiser of a conference contacts a service bureau and books time for a conference to be held at some time in the future. He also has to inform other participants to book their time for the conference. This type of conferencing can be costly and is not quick to set up.

Chairman outdial conferencing is where the conference organiser dials into an automatic server and enters a list of telephone numbers to be outdialled. Normally the chairman pays for his own call and all of the outdialled calls to the other delegates.

Meet me conferencing or indial conferencing is where all of the parties agree to meet at a certain time by dialling a telephone number. Access to the conference may be protected by an access code or PIN or may use the CLI of the delegate. In this case normally each delegate pays the cost of his own leg of the call. Current systems are not suitable for impromptu conferences and are not designed so as to allow instant conferencing to be potentially available to all telephone subscribers due to difficulties with conference number allocations.

Some mobile network operators offer conferencing services with a limited (small) number of participants. Such a service may be a mixture of chairman outdial and meet-me conferencing. For the chairman outdial facility the chairman must manually set up calls to each of the potential participants in turn and individually connect them into the conference. For the meet-me facility each participant calls the organiser who must have the Call Waiting facility enabled so that he can accept incoming calls and transfer them into the conference. This type of service has the disadvantage that the organiser cannot fully participate in the conference whilst he is setting up outgoing calls and handling incoming calls and that the conference can only proceed whilst the organiser is connected; this is a significant limitation as call drop-outs on mobile networks are not uncommon.

According to the present invention there is provided a telecommunications services apparatus for receiving and responding to a conference request message having data representing a conference request identifier and a group identifier indicative of delegates which are to take part in a group conference, said apparatus comprising a control processor operable, consequent upon detection of said conference request identifier in said conference request message,
to allocate a telephone number of a telecommunications conference equipment for providing inter-communication of telephone calls from said delegates to said group conference,
to generate a conference allocation message for communication to each of said delegates comprising data representative of the telephone number of said interconnection equipment, and a conference allocation identifier, and
to derive from said group identifier an address for each of the delegates to said group conference, said address identifying a telecommunications receiver to which said conference allocation message is to be sent.

A preferred embodiment of this invention combines an SMS group calling capability, which is a method for sending the same message via SMS easily to multiple recipients, with a network conferencing facility to provide an improved teleconferencing service. This allows users to invite a group of friends or colleagues to immediately enter into a voice conference using a telephone network. This is most readily applicable to mobile telephone networks because of the ease of use of SMS services to provide the conference invitation. Key aspects of this system are the dissemination of a conference number to all invitees as well as the user, i.e. organiser, via SMS, the management of a conference capability and the use of the CLIs (calling line identifications) of the invitees and the organiser as a protection mechanism to ensure that only wanted participants are allowed into the conference. Participants may dial in using a mobile or fixed handset, with possible protection offered for fixed handset access by disseminating a PIN number with the conference number.

The preferred technique allows anybody (although a mobile network operator may wish to limit the service to the operator's own customers) with a standard mobile handset which can send an SMS message, to specify a group of people to participate in an audio conference, and then send them all conference invitations with a single command. Audio conferencing can accordingly be made quick and easy to set up.

Management of data storage defining the members of each group being implemented by the network rather than by the users' handsets allows group membership to be integrated with the conferencing facility since this simplifies access control and the means of distributing invitations to conferences.

Since a high proportion of text messages are currently sent for leisure or entertainment purposes, it seems likely that any developments which simplify the use of the mobile telephone for multi-party conferences have the potential to encourage the use of audio conferencing significantly.

The invention will now be described, by way of illustrative and non-limiting example, with reference to the accompanying drawings in which like references denote like features and functions, and in which:
Figure 1 is a system block diagram of a telecommunications services apparatus according to an embodiment of the present invention;
Figure 2 is a table showing message definition of various types of messages used in the apparatus of Figure 1;
Figure 3 is a diagram showing a group table and hash table structure;
Figure 4 is a diagram of a conference access table;
Figure 5 is a diagram showing conference access table contents; and
Figure 6 is a diagram showing group table contents.

A preferred embodiment of the invention, known as the **"Let's Talk!"** system, will now be described.

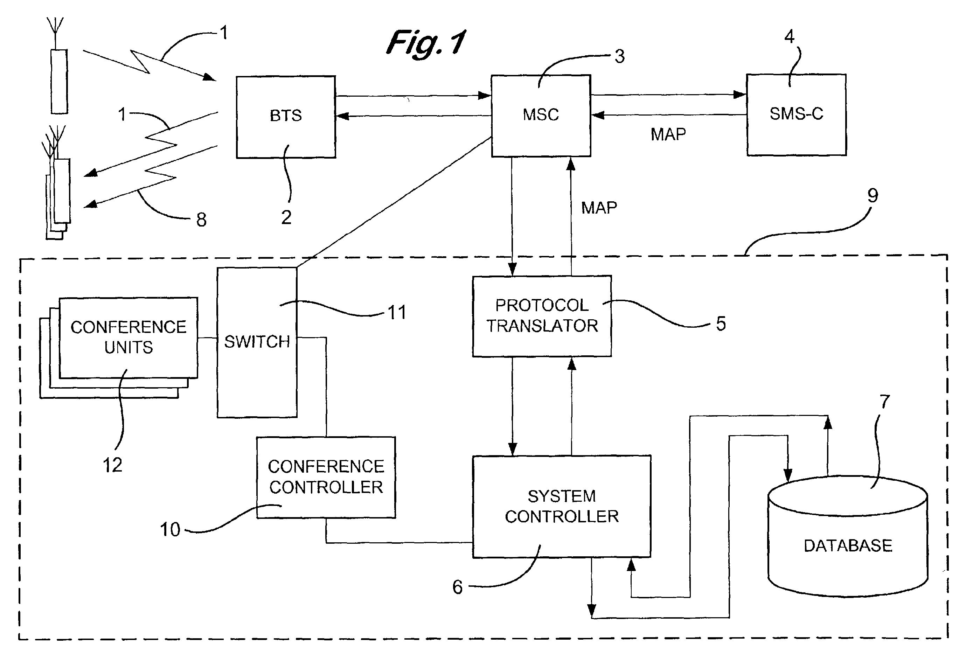

The **"Let's talk!"** system as shown in Figure 1 comprises **"Let's talk!"** equipment 9, connected to a mobile telephone network.

As shown in Figure 1, the mobile telephone network includes mobile telephones or stations (MS) 1,8 which communicate with a local base station (BTS) 2 itself connected to a mobile switching centre (MSC) 3. The MSC 3 communicates, using the Mobile Application Protocol (MAP), with a short message service centre (SMS-C) 4.

The **"Let's Talk!"** equipment 9 includes a protocol translator 5 communicating by means of MAP with the MSC 3 of the network. A system controller 6 is connected to the protocol translator 5, a system database 7 and a conference controller 10. A switch 11 is connected to the conference controller 10, the MSC 3 in the network, and conference units 12.

In the preferred embodiment, each of the Delegates of a Conference Group is identified by a telephone number at which the **"Let's talk!"** text message may be received. The telephone number may therefore be associated with a mobile telephone. However the present invention is not limited to telephone numbers and mobile telephones at which the **"Let's talk!"** text message may be received. More generally the delegates may be identified by an address at which the **"Let's talk!"** text message may be received. The address may indeed be a telephone number, but may be alternatively an e-mail address, web address or the like, at which a text message may be received, or in some cases a voice terminal that is connected via a text-to-speech system.

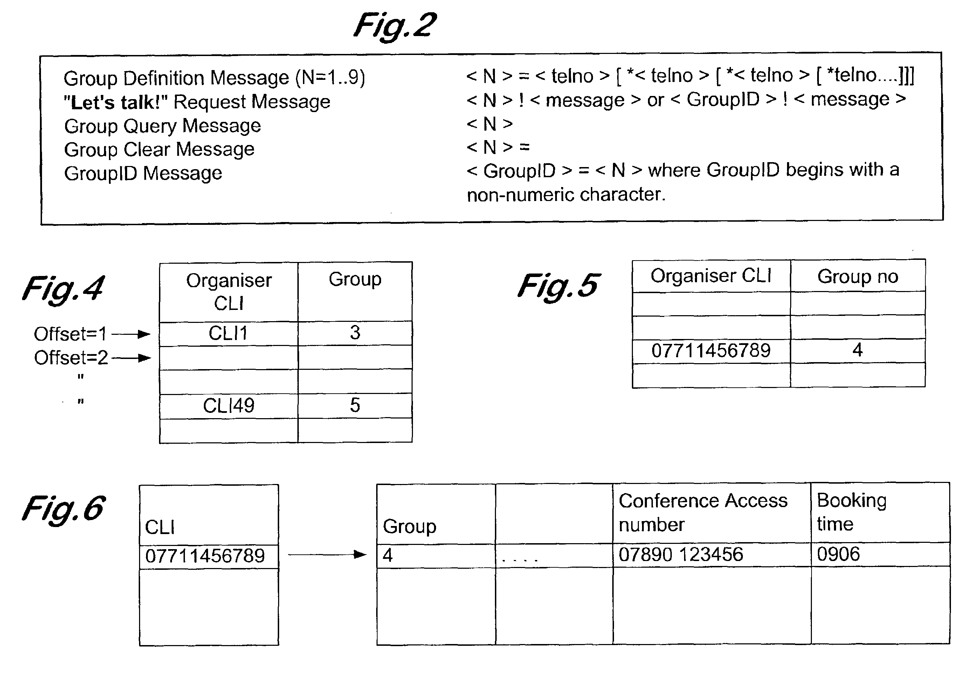

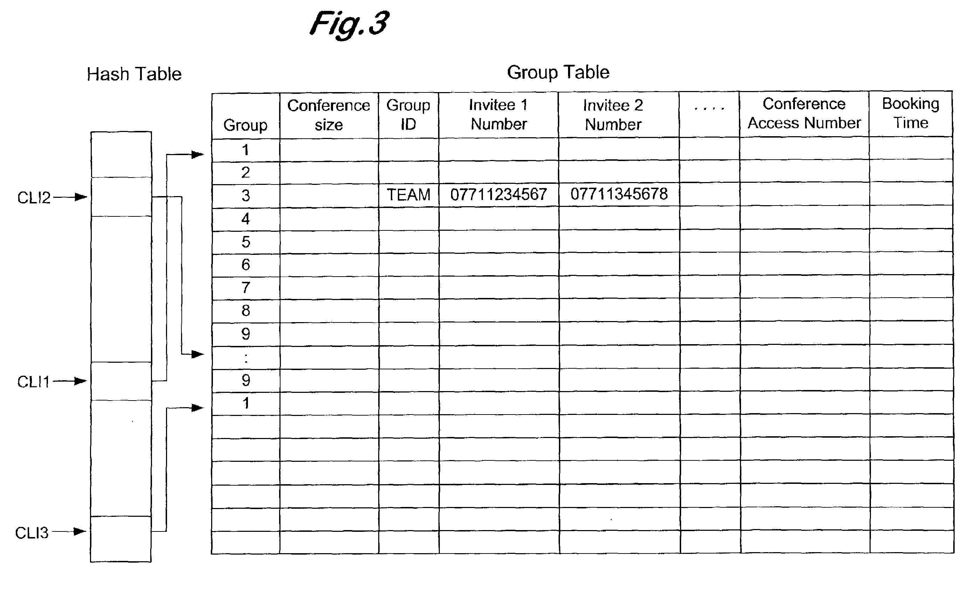

The preferred system allows users to store the definition of one or more groups of recipients in the database 7 in the network (including the system 9) rather than in the mobile handset. This opens the facility to all mobile users of a network operating this service. A simple SMS message syntax, for example as shown in Figure 2, is provided to allow the users -
1. to define the members of one or more groups
2. to query the members of a group
3. to remove or add members to a group
4. to delete a group
5. to invite a particular group to an audio conference with a text message

**"Let's talk!"** SMS messages which are to be delivered to the members of one of the defined groups are sent to a **"Let's talk!"** number which may be a short code or a normal ISDN number. This indicates to the network that any message sent to this number should be directed to the **"Let's talk!"** equipment 9 as shown in Figure 1.

A user (Organiser) could use the system in the following way. First a Group would be defined. This allows the Organiser to specify a list of telephone numbers to which the Organiser would be able to send a **"Let's talk!"** SMS message at any time in the future. These numbers identify the set of Invitees and comprise the Group Definition, which is stored in the database 7 in the equipment 9, which is effectively within the network. The Organiser is able to maintain a number of simultaneous Group Definitions in the database 7 and is able to query the network and to find the members of each Group. When the Organiser wishes to have an audio conference with the members of a particular Group he will send a **"Let's talk!"** message. He may also include optional additional text telling the Group members what the audio conference will be about.

In the preferred embodiment, and referring to Figure 2, the first character, a number (or optionally a group of characters representing a group - the GroupID), will indicate to which group the Organiser wishes to send the **"Let's talk!"** message. The next character will be an exclamation mark. This indicates that it is a **"Let's talk!"** message. If the Organiser wishes to include additional text then this may be appended after the exclamation mark. The message is then sent to the **"Let's talk!"** number which is the same for all Organisers. The message passes through the network and arrives at the equipment 9. The CLI provides a pointer to this Organiser's Group Definitions in the database 7. The Group identifier is extracted from the message and is used to look up the telephone number list for the Invitees in the relevant Group. The conference Organiser CLI, the Group Number and the number of people who may be in the conference (i.e. the Organiser and Invitees) are then sent to the conference (access) controller 10. The conference controller 10 will allocate a telephone number to the conference and place all details in a database together with this conference number. The system may also record the time when the conference booking was made. At this point, at the discretion of the network operator, it is possible to reserve conferencing equipment resources in order to ensure that if and when callers dial into this particular conference, then the necessary equipment will be available. This strategy, although providing a high level of service, may be wasteful of system resources, particularly because the user may not intend the conference to take place immediately. By using the optional text field in the invitation message, participants may be invited to join the conference at some future time. An alternative strategy is to reserve conference resources when the first delegate dials in. If at this point there are insufficient conference resources available for all the invitees, then the callers may be played an advisory message and disconnected. The equipment 9 will then send a **"Let's talk!"** Invitation Message to each Delegate (the Organiser and members of the Group defined by the Organiser). The **"Let's talk!"** Invitation Message will have a defined structure and will include the telephone number for the audio conference. When each delegate of the conference receives a **"Let's talk!"** Invitation Message, all they have to do is to extract the conference telephone number, e.g. utilising the 'Use number' facility available on many handsets, and call the number. Since the system has a list of the invited CLIs for the conference, only those people who are invited to the conference will be admitted to the system. This means that no PIN numbers are required when entering the conference, although PINs may be used, for example if access to the conference is to be made from a fixed network. This makes the system very easy to use for both the organiser and the other parties.

As an alternative to sending a conference telephone number to each invited delegate, it would be possible to use a single dial back number for all conferences. Delegates could be allocated to a conference using their CLI. This technique, although potentially simpler for the user (since they can keep the conference dial back number in their phone book or possibly memorise a simple short code), has the disadvantage that there is a possibility of ambiguity if a user has been invited to more than one conference during the validity period of a conference. Consequently, for maximum flexibility, it is thought preferable to distribute a conference access number to each delegate.

The key advantages of this system are:
- sending a **"Let's talk!"** message only requires 2 more characters than sending an ordinary SMS message
-
- easy to organise an informal telephone conference
-
- delegates can be told the topics for discussion in advance
-
- delegates know the identity of the conference organiser
- the **"Let's talk!"** invitation message is unobtrusive and may be ignored if desired
-
- using the 'Use number' facility on a mobile handset, it is not necessary to memorise the conference phone number
-
- only permitted CLIs (and hence callers) can join the conference
-
- no PIN is required to enter the conference and so it is easier to use although a PIN could be automatically generated if the operator wanted to allow conferencing from a fixed phone
-
- once the conference is organised, the conference organiser is in an equal position to other delegates. He may leave the conference at any stage (or even not join the conference)

There are three operations required for the preferred system to function. The first allows definition of Groups and the second allows **"Let's talk!"** messages to be sent. Finally, group members may dial into an audio conference.

### Group Definition

The Organiser on the mobile station 1 sends a message using a defined syntax. This message associates a list of telephone numbers with a Group identifier. This message is sent by SMS to the local base station 2 and hence to the MSC 3 and the SMS-C 4. The SMS-C 4 will perform the billing operation for this SMS call and also forward the message to the equipment 9. The message is received by the protocol translator 5 and converted, from the Mobile Application Protocol (MAP) used for signalling within mobile telephone networks, into an internal format suitable for use by the system controller 6. The system controller 6 interprets the message and stores the Group Definition in the system database 7.

### Sending a "Let's talk!" message

The Organiser on the mobile station 1 composes an SMS message with a defined syntax which indicates that the message is to be sent to a particular Group inviting them to a telephone conference. The message is sent to the local base station 2 and hence to the MSC 3 and the SMS-C 4. The SMS-C 4 provides the billing for this message and forwards the message to the equipment 9. The message is received by the protocol translator 5 and passed to the system controller 6. This message is interpreted and the database 7 is queried to find the members of the requested group. The system controller 6 passes the Organiser's CLI, the Group Number and the number of Delegates in the conference to the conference controller 10, which allocates a unique (at this time, or if there are sufficient telephone numbers - at all times) Conference Access Number and passes it back to the system controller 6. A **"Let's talk!"** Invitation Message is then sent to each Delegate with the Conference Access Number included in the message. The CLI of the Organiser is applied as the originator to each of the outgoing messages. The outgoing messages pass via the protocol translator 5 where they are converted to Mobile Application Protocol. They then pass through the MSC 3 to the SMS-C 4 where the Organiser may be billed for all of the outgoing messages. The SMS-C 4 then transmits the messages via the MSC 3 and the base stations 2 to the desired recipients' mobile stations 8.

In some implementations it may be preferred for the system to receive and/or send SMS messages directly to or from the mobile network, rather than via the SMS-C 4.

### Entering a Conference

When a Group member receives a **"Let's talk!"** Invitation Message, they are able to see the identity of the conference Organiser, and possibly the topic for discussion. To enter the conference they may extract the Conference Access Number from the **"Let's talk!"** message and utilise the 'Use number' facility to directly dial the conference via the switch 11 and one of the conference units 12. Since the system knows the CLIs of all the conference Delegates, no PIN number is needed for security. CLI filtering can be performed.

When a participant enters or leaves a conference a headcount announcement is typically provided.

In the preferred embodiment of the system, a syntax is defined so that the user can control operation of the system from within the SMS message itself. Several message operations are defined and these are shown in Figure 2. Not all of these operations are required for basic system operation.

This structure also supports the use of names which allow the Organiser to easily memorise his Groups.

In the Group Definition Message shown in Figure 2, it is to be noted that "*" is used as a key for separating telephone numbers (telno). This is preferred because it is readily accessible on all mobile handsets even when used in digit entry mode and hence is fast to use.

In some implementations, an Organiser may be able to define memorable InviteeIDs which may be used instead of telephone numbers in a Group Definition Message.

In some implementations, an Organiser may be able to use web access or the like, via fixed and/or mobile networks, to perform Group Definition functions and also to initiate **"Let's talk!"** conferences.

### DATABASE STRUCTURES

### 1. Group Data

In the preferred embodiment, the main Group Table in the system database 7 contains information specified by Organisers, such as the GroupID and Invitee Numbers, as shown in Figure 3.

It also contains information such as the allocated Conference Access Number and Booking Time.

The Group Table is organised into sets of Groups, say nine, for each user of the service (Organiser).

Organisers are identified by their CLI; a wide range of potential CLIs means that use of storage capacity is maximised and most efficient database access is achieved through use of a hash table. For each CLI a hash function provides an entry in the Hash Table which points to the first Group for that Organiser.

Figure 3 shows the Hash Table & Group Table structure. In the example, the Organiser with CLI 1 has defined Group 3, with telephone numbers for two Invitees. The Group has also been given a name (the GroupID) for memorable access.

### 2. Conference Access Data

In the preferred embodiment, a contiguous block of telephone numbers are allocated as available Conference Access Numbers; calls to these numbers are routed to the switch 11 in the equipment 9.

A linked list data structure is used to achieve quick and easy access to an available number, i.e. one not currently in use as a Conference Access Number. When a number in use is released, as described below, it is returned to the end of the list of free numbers.

Conference Access Numbers are allocated automatically from a pool of telephone numbers. A Conference Access Table, as shown in Figure 4, holds the Organiser's CLI and the Group to which the Conference Access Number is allocated. As Conference Access Numbers are in a contiguous block, the first number in the block can be subtracted from any given number to provide an offset into the Conference Access Table.

When a Conference Call arrives on the system, the Conference Access Table is used to determine whether the caller is the Organiser. If not, the Organiser CLI and Group Number are used to identify an entry in the Group Table which is checked to verify that the caller is an Invitee in the Group. If the caller is the Organiser or an Invitee, they are admitted to the conference; if not, an appropriate announcement is played and the call disconnected.

As an alternative when network facilities and routings allow, a special mapping or numbering scheme may be used to provide the Conference Access Numbers. For example, a prefix could be added to the Organiser's CLI to provide the Conference Access Number. In this case, when a Conference Call arrives, removal of the prefix enables the system to immediately identify whether the caller is the Organiser and, if not, provides a pointer to the Group Table via the Hash Table to allow determination of the Group number and verification that the caller is an Invitee.

In some implementations, which allow an Organiser to define memorable InviteeIDs which may be used instead of telephone numbers in a Group Definition Message, the InviteeIDs may be stored within the system database 7. In response to a Group Query Message, the system would provide the Group Definition in the form that it was entered by the Organiser, such that the Organiser would see and recognise the memorable InviteeIDs.

When a **"Let's talk!"** Request Message is received from an Organiser and invitation messages are sent by SMS to all of the conference Delegates, the allocated Conference Access Number is stored in the Group Table together with the Booking Time.

Twenty four hours (or some other preferred Validity Period) after a conference booking, the Conference Access Number allocation may be cancelled by removing the number from the appropriate Group record in the Group Table, clearing the entry in the Conference Access Table and returning the number to the list of free numbers. However, if the Organiser books another **"Let's talk!"** conference for the same Group within the Validity Period , the same Conference Access Number will be used and the time extended for a further 24 hours (or preferred Validity Period).

If the Organiser changes the definition of a Group within the 24 hour validity period of a Conference Access Number, the Conference Access Number is cancelled as above and any callers currently participating in a conference on this Conference Access Number will be disconnected. When the Organiser sends a **"Let's talk!"** Request Message for a re-defined Group, a new Conference Access Number is allocated . This feature is implemented to limit each Organiser to a fixed maximum of Conference Access Numbers at any one time.

### 3. Alternative Data Structures

As an alternative, the system database 7 could be implemented using a Relational Database Management System (RDBMS). However the performance, particularly in terms of access times, may not be sufficient for a system supporting a large customer base frequently creating and modifying Groups and initiating conferences.

### "Let's talk" MESSAGE HANDLING

### Group Definition Message

The system controller 6 decodes the Group Definition Message and associated signalling information presented to the system by the mobile telephone network to determine the
- Organiser CLI
- Group number
- List of invitee telephone numbers

The system controller 6 uses the CLI to access the Hash Table (Figure 3) to determine whether there is already an entry in the table for this Organiser. If there is no entry yet for this Organiser, a new entry is immediately created.

The new or existing Organiser CLI entry provides a pointer into the Group Table. The Group number given by the Organiser in the Group Definition Message provides an offset to access the appropriate group record for this Organiser.

The Invitee telephone numbers are written into the relevant fields in the record. All other Invitee number fields in the record are set to null in case the Organiser has decided to re-define the Group.

### Group Query Message

The system controller 6 decodes the Group Query Message and associated signalling information presented to the system by the mobile telephone network to determine the
- Organiser CLI
- Group Number

The system controller 6 accesses the Group Table to determine the current contents of a Group record; these are returned to the Organiser in an SMS message.

In the event that the current contents of a group will not fit in a single SMS message, then the information may be returned to the user in multiple SMS messages.

### Group Clear Message

The system controller 6 decodes the Group Clear Message and associated signalling information presented to the system by the mobile telephone network to determine the
- Organiser CLI
- Group Number

The system controller 6 accesses the Group Table and sets all fields in the appropriate Group record to null. If a Conference Access Number is currently allocated for this Group, the entry in the Conference Access Table is cleared and the Conference Controller informed.

Optionally, an SMS message may be sent to the Organiser confirming that the Group has been cleared.

### GroupID Message

The system controller 6 decodes the GroupID Message and associated signalling information presented to the system by the mobile telephone network to determine the
- Organiser CLI
- Group Number
- GroupID

The system controller 6 accesses the Group Table and loads the GroupID field in the appropriate Group record with the GroupID text provided in the message,

### "Let's talk!" Request Message

The system controller 6 decodes the **"Let's talk!"** Request Message and associated signalling information presented to the system by the mobile telephone network to determine the
- Organiser CLI
- Group number
- Message (optional)

The system controller 6 uses the CLI to access the Hash Table to determine whether there is already an entry in the table for this Organiser. If there is no entry yet for this Organiser, then the system controller 6 sends the Organiser an advisory message.

If the Group is already defined, the system controller 6 will obtain a Conference Access Number from the conference controller 10, store it in the Group Table and then send a **"Let's talk!"** Invitation Message to each of the Delegates. A **"Let's talk!"** Invitation Message includes the Conference Access Number and any optional message provided by the Organiser.

### Operation of the System Controller and Conference Controller

1. A **"Let's talk!"** Request Message arrives at the system controller 6.
2. The system controller 6 passes the organiser's CLI, the group number and the number of Delegates in the conference to the conference controller 10.
3. A unique Conference Access Number is allocated to the conference. This number is passed back to the system controller 6 and is stored in the **"Let's talk!"** Group Table, with the Booking Time. The system controller 6 sends an SMS message to each Delegate (all the Invitees and the conference Organiser) with the Conference Access Number included.
   If there are no free Conference Access Numbers an appropriate message is sent to the Organiser.
4. When each Delegate receives an SMS **"Let's talk!"** Invitation message, they will normally be able to utilise the 'use number' facility on the handset to extract the telephone number from the message and easily call into the conference.
5. When each phone call reaches the switch 11, the dialled number (Conference Access Number) is used to provide an offset into the Conference Access Table. If it is a valid Conference Access Number, indicated by there being a non-null entry in the Conference Access Table, and there is sufficient capacity for all callers in this conference to be accepted, the call is connected to the correct conference unit. If no entry is found then the call is rejected. If there is insufficient capacity for all Delegates to participate in a particular conference, callers are given an appropriate announcement.
6. Within the Validity Period of the Conference Access Number, Delegates may dial-in at any time. It is possible that an individual may receive invitations to more than one conference. However, each invitation will have a separate Conference Access Number, and Delegates can thus choose which conference they wish to join.

### Example:

An Organiser with CLI equal to 07711456789 sends an SMS Group Definition Message:
4=077112234567*07711345678
Later, they send a **"Let's Talk!"** Request Message:
4!

This message is received by the **"Let's talk!"** system at 9.06 am. The system controller 6 will send the Organiser CLI, Group Number and the number of Delegates in the conference to the Conference Controller. It will look for a free conference phone number (e.g. 07890 123456) and allocate it to the conference. Entries are made in the Conference Access Table as shown in Figure 5, and the allocated Conference Access Number is returned to the system controller 6. **"Let's talk!"** Invitation Messages are then sent out to the Organiser and all members (Invitees) of Group 4.

The information in the Group Table is updated as shown in Figure 6, with the Conference Access Number and Booking Time.

After a short time the two conference Invitees and the Organiser receive their **"Let's talk!"** Invitation Messages.
Let's talk!
on 07890 123456

Delegates can choose whether to join the conference.

Later that day, at 6pm, the Organiser decides to identify the Group by sending:
SALES=4 and he immediately sends another **"Let's talk!"** Request Message:
SALES!

Since the original booking is not 24 hours old, the original Conference Access Number will be extended for another 24 hours. This conference will also be held immediately.

Two days later he wants to organise a conference at 4.30 pm by sending a message:
SALES!4.30pm UK time re parts delivery to XYZ

Since the second booking is more than twenty four hours old, a new Conference Access Number will be allocated (e.g. 07890 987654) and each delegate will receive a **"Let's talk!"** Invitation Message
Let's talk!
on 07890 987654
4.30pm UK time
re parts
delivery to
XYZ.

Delegates may join the conference at any time. If the Organiser thinks some people may be forgetful, he may send another **"Let's talk!"** Request (SALES !) as the time approaches 4.30pm.

### Alternative Architectures

The functionality of the system described above can be provided by alternative system architectures. In particular, the routing of SMS or mobile text messages may take other routes through the network.

### GLOSSARY

| **Term** | **Meaning** |
|---|---|
| *Audio conference, Voice conference, Conference call, Group conference* | Same as: *Conference.* |
| *Booking Time* | The time at which a *"Let's talk!" Request Message* is received from an *Organiser* and a *Conference* is booked; the time is stored with the *Group Definition* in the *Group Table.* |
| *CLI* | Calling Line Identity. The number of the telephone which initiated a call. |
| *Conference* | A set of telephone calls aggregated so that each caller is able to hear all the other callers speaking at the same time. |
| *Conference Access Number* | The telephone number to call for a particular *Conference.* |
| *Conference Access Table* | Information stored about currently permissible *Conferences.* |
| *Conference booking* | The time that the *Conference request message* is received. |
| *Conference Controller* | A component of the "Let's talk!" system which provides management of the switch to ensure that participants are connected to the appropriate Conference Unit. |
| *Conference identifier* | Same as: *Conference request identifier.* |
| *Conference message* | An optional message part from the *Organiser* included at the end of the *"Let's talk" message.* |
| *Conference Organiser* | Same as: *Organiser.* |
| *Conference request identifier* | An "!" after the *Group indicator* in a *Conference request message* that triggers sending a *"Let's talk" message* to the *Delegates.* |
| *Conference request message* | A message of a defined syntax, sent by an *Organiser* to the "Let's Talk" equipment, to invite *Delegates* to a *Conference.* |
| *Conference telephone number* | Same as: *Conference access number.* |
| *Conference Unit* | A component of the "Let's talk!" system which provides audio conferencing facilities. |
| *Delegate* | The *Organiser* or member of a *Group.* A person who is sent a *"Let's talk" Message.* |
| *Delegates* | The combination of the *Organiser* and members of a particular *Group* invited to a particular *Conference.* |
| *GPRS* | General Packet Radio Service. A packet-switched data service for GSM. |
| *Group* | A collection of *Invitees,* for a particular *Organiser* CLI. |
| *Group Clear Message* | A message sent by an *Organiser* requesting the current *Group Definition* to be cleared. |
| *GroupID* | A set of characters used to identify a *Group.* (an alternative to a *Group Number).* |
| *GroupID Message* | A message sent by an *Organiser* specifying a *GroupID.* |
| *Group Definition* | The telephone numbers of a set of *Invitees* (and/or, in principle, a |
| | set of InviteeIDs). |
| *Group Definition Message* | The message sent by an *Organiser* to setup or modify a *Group definition.* |
| *Group Identifier* | A number, or optionally a set of characters, that identifies a particular *Group* associated with a particular *Organiser.* |
| *Group Indicator* | Same as: *Group identifier.* |
| *Group Number* | A numeric identifier for a *Group.* |
| *Group Query Message* | A Message set by an *Organiser* requesting the *Group Definition* to be sent to him. |
| *Group Table* | Information stored for *Organisers* including their *Group definitions.* |
| *GSM* | Global System for Mobile Communications. The standard for digital mobile communications in most parts of the world. |
| *Hash Table* | A data structure within the "Let's talk!" Database which provides pointers from Organiser CLIs into the Group Database. |
| *Invitee* | A member of a *Group* for a particular *Organiser CLI.* |
| *InviteeID* | A set of characters used to identify an *Invitee* (an alternative to *Invitee* telephone number) |
| *Invitee Number* | The telephone number that identifies an *Invitee.* |
| *"Let's talk!" Controller* | A component of the "Let's talk!" system which provides control and management functions. |
| *"Let's talk!" Database* | A component of the "Let's talk!" system which provides storage for all of the data associated with *Organisers* and *Conferences.* |
| *"Let's talk!" Invitation Message* | The message received by the *Delegates* inviting them to a *Conference* on a particular *Conference Number.* |
| ***"Let's talk!"*** *Request Message* | The message sent by the *Organiser* to initiate a *Conference.* |
| *"Let's talk!" system* | The equipment that provides the "Let's talk!" service. It comprises: |
| | a *Protocol Translator* |
| | a *"Let's talk!" Controller* |
| | a *"Let's talk!" Database* |
| | a *Conference Controller* |
| | a *Switch* |
| | a number of *Conference Units* |
| *Organiser* | Person who manages *Group definitions* and sends *Conference request messages* |
| *Organiser CLI* | The Calling Line Identity of an *Organiser,* a unique identification of a mobile handset, automatically provided to the system by the mobile telephone network. |
| *Original sender* | Same as: *Organiser.* |
| *Participant* | *A Delegate* who chooses to join a *Conference.* |
| *PDA* | Personal Digital Assistant. |
| *Protocol Translator* | A component of the **"Let's talk!"** system which provides an interface between the Mobile Switching Centre (MSC) in the mobile telephone network and the "Let's talk!" Controller. |
| *SMS* | Short Message Service. A service which allows handsets to send and receive plain-text messages over the GSM network. |
| *Switch* | A component of the "Let's talk!" system which connects conference *participants* to the appropriate *Conference Unit.* |
| *Validity Period* | The time during which a Conference Access Number may be used, typically 24 hours from the Booking Time. |
| *WAP* | Wireless Application Protocol. A family of protocols and data formats designed to deliver Internet content and services to mobile devices. |

## Claims

1. A telecommunications services apparatus for receiving and responding to a conference request message having data representing a conference request identifier and a group identifier indicative of delegates which are to take part in a group conference, said apparatus comprising a control processor operable, consequent upon detection of said conference request identifier in said conference request message
to allocate a telephone number of a telecommunications conference equipment for providing inter-connection of telephone calls from said delegates to said group conference,
to generate a conference allocation message for communication to each of said delegates comprising data representative of the telephone number of said inter-connection equipment, and a conference allocation identifier, and
to derive from said group identifier an address for each of the delegates to said group conference, said address identifying a telecommunications receiver to which said conference allocation message is to be sent.

2. A telecommunications services apparatus as claimed in Claim 1, wherein said group identifier of said conference request message provides said addresses of said telecommunications receivers to which said conference allocation message is to be sent.

3. A telecommunications services apparatus as claimed in Claim 1 or Claim 2, comprising
a data store operable to store data representative of said addresses of said delegates to said group conference in association with said group identifier, said group identifier providing a reference to said addresses stored in said data store, wherein said control processor is operable upon receipt of said conference request message to retrieve said addresses from said data store using said group identifier.

4. A telecommunications services apparatus as claimed in any preceding Claim, comprising
a communications processor coupled to said control processor for receiving said conference request message and for transmitting said conference allocation message to each of said addresses of said delegates to said group conference.

5. A telecommunications services apparatus as claimed in any preceding Claim, wherein said control processor is operable to determine a time at which said telecommunications conference equipment may be used, and to include in said conference allocation message data identifying said time for said conference.

6. A telecommunications services apparatus as claimed in any preceding Claim, wherein at least one of said addresses of said delegates of said conference group is a telephone number of a telecommunications receiver arranged to received text data, said conference allocation message being communicated as a text message.

7. A telecommunications services apparatus as claimed in Claim 6, wherein said telecommunications receiver is a mobile radio telephone.

8. A telecommunications services apparatus as claimed in Claim 4, wherein at least one of said addresses of said delegates of said conference group is a telephone number of a telephone which cannot receive text data, said communications processor being operable
to convert said conference allocation message into an audible signal representing the content of said conference allocation message, and
to establish a telephone call to said telephone, to deliver said audible signal.

9. A telecommunications services apparatus as claimed in Claim 4, wherein at least one of said addresses of said parties of said conference group is an e-mail address, said communications processor being operable to communicate said conference allocation message to said e-mail address.

10. A telecommunications services apparatus as claimed in any preceding Claim, wherein said conference request message includes data representative of a conference message for said delegates, said control processor being operable to include said conference message in said conference allocation message.

11. A telecommunications services apparatus as claimed in any preceding Claim, wherein said control processor is arranged to respond to a received group establishment message having a predetermined format to establish a group of addresses in association with a group identifier, and to store the group of addresses and said associated group identifier in said data store for subsequent use.

12. A telecommunications services apparatus as claimed in Claim 11, wherein said control processor is operable to respond to received group edit commands having a predetermined format to edit a group of addresses associated with a group identifier, and to store the edited group of addresses in association with said associated group identifier in said data store for subsequent use.

13. A telecommunications services apparatus as claimed in Claim 12, wherein said control processor is operable to respond to said group edit commands to add or remove delegates from a group and to store said group in said data store, or to delete a group from said data store.

14. A telecommunications services apparatus as claimed in any preceding Claim, wherein said conference request message is communicated to said telecommunications services apparatus by an originating telecommunications apparatus, and said conference request message includes an identifying address of said originating telecommunications apparatus, said control processor being operable
to include data representative of said identifying address of said originating telecommunications apparatus in said conference allocation message.

15. A telecommunications services apparatus as claimed in Claim 14, wherein said identifying address is a telephone number of the originating telecommunications apparatus, or the CLI (calling line identification) of that telecommunications apparatus.

16. A telecommunications services apparatus as claimed in Claim 14 or 15, wherein said originating telecommunications apparatus is a mobile telephone, said conference request message being a text message sent by SMS or the like.

17. A telecommunications services apparatus as claimed in any of Claims 14 to 16, wherein said control processor is operable in combination with said communications processor to transmit said conference allocation message to said originating telecommunications apparatus last.

18. A telecommunications services apparatus as claimed in any preceding Claim, including storage means for storing a delegate alias which is representative of at least one of said delegate addresses, said delegate alias being used to associate said at least one of said delegate addresses with said respective group identifiers.

19. A method of operating a telecommunications system, said method comprising the steps of
receiving a conference request message having data representing a conference request identifier and a group identifier indicative of delegates which are to take part in a group conference,
detecting said conference identifier in said conference request message, and consequent upon said conference identifier being detected,
allocating a telephone number representative of telecommunications conference equipment for providing inter-connection of telephone calls from said delegates to said conference group,
generating a conference allocation message for communication to each of said delegates to said group conference comprising data representative of the telephone number of said inter-connection equipment, and a conference allocation identifier, and
deriving from said group identifier an address for each of the delegates to said group conference, said address identifying a telecommunications receiver to which said conference allocation message is to be sent.

20. A computer program providing computer executable instructions, which when loaded on to a data processor configures the data processor to operate as a telecommunications services apparatus as claimed in any of Claims 1 to 18.

21. A computer program providing computer executable instructions, which when loaded on to a data processor causes the data processor to perform the method according to Claim 19.

22. A data carrier having a computer readable medium on which are recorded information signals representative of the computer program claimed in any of Claims 20 or 21.
